(19) **Europäisches Patentamt**
**European Patent Office**
**Office européen des brevets**

(11) **EP 2 471 184 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(51) Int Cl.:
*H04B 1/00* (2006.01)    *H04H 40/27* (2008.01)

(21) Anmeldenummer: **10739616.0**

(22) Anmeldetag: **03.08.2010**

(86) Internationale Anmeldenummer:
**PCT/EP2010/061281**

(87) Internationale Veröffentlichungsnummer:
**WO 2011/023496 (03.03.2011 Gazette 2011/09)**

(54) **VERFAHREN UND STEUERGERÄT ZUR DIREKTABTASTUNG EINER MEHRZAHL VON RADIOBÄNDERN**

METHOD AND CONTROL DEVICE FOR DIRECT SAMPLING A PLURALITY OF RADIO BANDS

PROCÉDÉ ET APPAREIL POUR LE BALAYAGE DIRECT D'UNE PLURALITÉ DE BANDES RADIO

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **27.08.2009 DE 102009028919**

(43) Veröffentlichungstag der Anmeldung:
**04.07.2012 Patentblatt 2012/27**

(73) Patentinhaber: **Robert Bosch GmbH**
**70442 Stuttgart (DE)**

(72) Erfinder:
• **LEHR, Carsten**
  **30163 Hannover (DE)**
• **NYENHUIS, Detlev**
  **31079 Sibbesse (DE)**
• **RISSE, Marcus**
  **31139 Hildesheim (DE)**

(56) Entgegenhaltungen:
| | |
|---|---|
| **EP-A2- 0 896 425** | **EP-A2- 1 154 589** |
| **EP-A2- 1 154 589** | **WO-A1-2006/087506** |
| **DE-A1- 19 838 244** | **US-A1- 2005 008 098** |
| **US-A1- 2008 248 770** | **US-A1- 2008 248 770** |

EP 2 471 184 B1

**Beschreibung**

Stand der Technik

Die vorliegende Erfindung bezieht sich auf ein Verfahren zur Direktabtastung einer Mehrzahl von Radiobändern gemäß Anspruch 1, ein Verfahren zur Bestimmung einer gemeinsamen Abtastfrequenz gemäß Anspruch 7, ein Steuergerät gemäß Anspruch 11, sowie ein Computerprogrammprodukt gemäß Anspruch 12.

DAB (Digital Audio Broadcasting) ist ein digitaler Übertragungsstandard, insbesondere für Hörfunkprogramme. Im Folgenden wird die Bezeichnung DAB zusammenfassend als Oberbegriff für DAB, DAB+ und DMB (Digital Media Broadcasting) verwendet.

Derzeitige DAB-, FM-, AM-Rundfunk-Empfänger weisen Tunerbaugruppen (Empfangsteilbaugruppen) auf, in der die von der Antenne kommenden HF-Signale (Hochfrequenzsignale) gefiltert, verstärkt und auf eine geeignete Zwischenfrequenz gemischt werden. In einigen Empfängersystemen werden danach die Signale mit A/D-Wandlern (Analog-Digital-Wandlern) digitalisiert und digital demoduliert. Dabei kommen getrennte Tunerbaugruppen für DAB und FM/AM zum Einsatz.

Ein Nachteil des Stands der Technik ist, dass sowohl für FM/AM als auch für DAB vor der Digitalisierung die Bandbreite des Signals stark reduziert wird, so dass zum Empfang zweier oder mehrere Signale, die jeweils einem Sender entsprechen können, jeweils pro zu empfangendem Signal ein vollständiger Empfängerpfad, bestehend aus Tunerbaugruppe und A/D Wandler erforderlich ist.

In hochwertigen mobilen Empfängersystemen werden häufig zwei oder mehr Empfängerpfade für FM/AM benötigt um Funktionen wie z.B. Empfangsverbesserung durch Diversity-Algorithmen, Hintergrundempfänger für RDS (Radio Data System) Empfang, Überwachung von TMC (Traffic Message Channel) Sendern, etc. zu realisieren. Zusätzlich werden für DAB ein oder mehr Empfangspfade benötigt, um z.B. DAB-Empfangsverbesserung (z.B. Diversity) und Hintergrundtuner z.B. für eine Senderliste zu realisieren.

Bei neueren Systemvorschlägen ist es vorgesehen, dass das gesamte AM oder FM Band mit Hilfe eines Breitband A/D-Wandlers digitalisiert wird, um das gesamte Band in digitaler Form vorliegen zu haben. In einer digitalen Signalverarbeitungseinheit kann dann in Abhängigkeit von der verfügbaren Rechenleistung eine beliebige Anzahl von Kanälen demoduliert werden.

Die WO 2006/087506 A1 befasst sich mit einer verbesserten Architektur für DAB-Empfänger. Es werden mehrere Radiosignale in unterschiedlichen Frequenzbereichen empfangen, auf eine gemeinsam Frequenz umgesetzt und anschließend analog-digital-gewandelt.

Die US 2008/248770 A1 befasst sich mit einem Verfahren zur Abtastung zweier Radiobänder unter Verwendung zweier Analog-Digital-Wandler, die dieselbe Abtastfrequenz nutzen.

Offenbarung der Erfindung

Vor diesem Hintergrund wird mit der vorliegenden Erfindung ein Verfahren zur Direktabtastung einer Mehrzahl verschiedener Radiobändern, ein Verfahren zur Bestimmung einer gemeinsamen Abtastfrequenz, weiterhin ein Steuergerät, das diese Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Erfindungsgemäß kann das Verfahren der Direktabtastung auf den DAB Empfang ausgeweitet werden. Somit können DAB/FM/AM Empfänger und insbesondere DAB/FM/AM Radio-Empfänger mit Direktabtastung geschaffen werden. Dazu wird die Bestimmung einer Abtastfrequenz vorgeschlagen, die sowohl für das DAB Band, als auch für das FM Band und das AM Band eingesetzt werden kann.

Vorteilhafterweise lässt sich dadurch der Empfangspfad für Systeme, mit denen DAB und FM/AM empfangen werden kann, deutlich vereinfachen.

Die vorliegende Erfindung schafft ein Verfahren zur Direktabtastung einer Mehrzahl von Radiobändern, das die folgenden Schritte umfasst: Empfangen eines ersten Radiobands über eine erste Schnittstelle und mindestens eines weiteren Radiobands über mindestens eine weitere Schnittstelle, wobei das erste Radioband und das mindestens eine weitere Radioband jeweils unterschiedlichen Frequenzbereichen zugeordnet sind und es sich bei dem ersten Radioband oder dem mindestens einen weiteren Radioband um ein DAB-Band handelt; Empfangen eines Auswahlsignals über eine Schnittstelle, wobei das Auswahlsignal anzeigt, ob eine Weiterverarbeitung des ersten Radiobands und/oder des mindestens einen weiteren Radiobands vorgesehen ist; und Abtasten des ersten Radiobands mit einer gemeinsamen Abtastfrequenz und/oder des mindestens einen weiteren Radiobands mit der gemeinsamen Abtastfrequenz, abhängig von dem Auswahlsignal.

Das erfindungsgemäße Verfahren kann beispielsweise von einem Empfangsteil eines Radioempfängers ausgeführt werden, der ausgebildet ist, um Sender oder Programme zu empfangen, die über eine Übertragungsstrecke auf einer Mehrzahl von Radiobändern ausgestrahlt werden. Bei der Mehrzahl von Radiobändern kann es sich um Hochfrequenzsignale handeln, über die jeweils ein Informationssignal, beispielsweise ein Radioprogramm übertragen wird. Jedes der Radiobänder kann einen eigenen Frequenzbereich aufweisen. Die Frequenzbereiche der Radiobänder können dabei voneinander beabstandet sein. Das DAB-Band kann auf einer Frequenz zwischen 174,928 MHz und 239,2 MHz ausgestrahlt werden. Die Frequenzen der anderen Radiobänder können niedriger sein, als die des DAB-Bandes. Beispielsweise kann es sich bei den anderen Radiobändern um ein AM-Band mit einer Frequenz zwischen 153kHz und 26,1MHz und/oder um ein FM-Band mit einer Frequenz zwischen 87,5 MHz und 108 MHz handeln. Die erste und die mindestens eine weitere Schnittstelle können Schnittstellen zu Antennen oder Vorstufen darstellen, die an die entsprechenden Radiobänder angepasst sind. Die Radiobänder können gleichzeitig über die entsprechenden Schnittstellen empfangen werden. Beispielsweise können gleichzeitig drei unterschiedliche Radiobänder empfangen werden. Das Auswahlsignal kann beispielsweise von einem Benutzer bereitgestellt werden, in dem der Benutzer eines der Radiobänder auswählt. Auch kann das Auswahlsignal von einem System bereitgestellt werden, um eine benötigte Information zu erhalten, die über ein bestimmtes Radioband übertragen wird. Gesteuert durch das Auswahlsignal kann beispielsweise ein Umschalter gesteuert werden, über den die Mehrzahl der Radiobänder einer Abtasteinrichtung zugeführt werden können. Die Abtasteinrichtung kann ausgebildet sein, um das über das Auswahlsignal auswählbare Radioband mit der gemeinsamen Abtastfrequenz abzutasten. Die gemeinsame Abtastfrequenz kann vorbestimmt und fest eingestellt sein. Die gemeinsame Abtastfrequenz definiert dabei eine entsprechende gemeinsame Abtastrate. Somit kann jedes der Mehrzahl der Radiobänder mit ein und derselben gemeinsamen Abtastfrequenz bzw. Abtastrate abgetastet werden. Die Abtasteinrichtung kann ausgebildet sein, um gleichzeitige zwei oder mehr Radiobänder abzutasten. In diesem Fall kann das Auswahlsignal ausgebildet sein, um eine entsprechende Anzahl an Radiobändern auszuwählen, um deren Abtastung und Weiterverarbeitung zu ermöglichen.

Das erste Radioband kann ein Signal repräsentieren, das von einer an das erste Radioband angepassten ersten Vorstufe bereitgestellt wird. Entsprechend dazu kann das mindestens eine weitere Radioband ein Signal repräsentieren, das von mindestens einer an das mindestens eine weitere Radioband angepassten weiteren Vorstufe bereitgestellt wird. Somit kann jedem Radioband eine eigene Vorstufe zugeordnet sein.

Ferner können das erste und das mindestens eine weitere Radioband Signale repräsentieren, die von mindestens einer an das jeweilige Radioband angepassten Antenne bereitgestellt werden. Somit kann für jedes Radioband eine eigene Antenne vorgesehen sein oder es kann eine gemeinsame Antenne für zwei oder mehrere Radiobänder gemeinsam genutzt werden. Die gemeinsame Antenne kann an mehrere Radiobänder angepasst sein, so dass nicht für jedes Band eine eigene Antenne, aber eine eigene Vorstufe verwendet wird.

Das erfindungsgemäße Verfahren kann einen Schritt des Bereitstellens eines ersten abgetasteten Radiobands oder eines zweiten abgetasteten Radiobands an einer Schnittstelle umfassen. Dabei kann die Schnittstelle eine Schnittstelle zu einer digitalen Signalverarbeitungseinrichtung repräsentieren. Auf diese Weise können die unterschiedlichen Radiobänder nach ihrer Abtastung von ein und derselben Signalverarbeitung weiterverarbeitet werden.

Ferner können die Radiobänder ferner ein AM-Band und/oder ein FM-Band umfassen. Somit kann das erfindungsgemäße Verfahren vorteilhaft bei einem DAB-, FM-, AM-Rundfunk Empfänger eingesetzt werden.

Daher können die unterschiedlichen Frequenzbereiche beispielsweise einen Frequenzbereich zwischen 100kHz und 50MHz und/oder einen Frequenzbereich zwischen 50MHz und150MHz und einen Frequenzbereich zwischen 150MHz und 250MHz umfassen. Insbesondere sind auch Frequenzbereiche zwischen 153kHz und 26,1MHz, 87,5MHz und 108MHz und zwischen 174,928MHz und 239,2MHz möglich. Alternativ sind auch beliebig andere Frequenzbereiche möglich, so dass das Verfahren beispielsweise auf in unterschiedlichen Ländern eingesetzte Radiofrequenzen angepasst werden kann.

Die gemeinsame Abtastfrequenz kann gemäß einem weiteren erfindungsgemäßen Verfahren zur Bestimmung einer gemeinsamen Abtastfrequenz bestimmt sein. Die gemeinsame Abtastfrequenz kann separat bestimmt werden und an eine Vorrichtung bereitgestellt werden, die ausgebildet ist, um das Verfahren zur Direktabtastung der Mehrzahl von Radiobändern auszuführen. Alternativ kann die gemeinsame Abtastfrequenz direkt von der Vorrichtung bestimmt werden, die ausgebildet ist, um das Verfahren zur Direktabtastung der Mehrzahl von Radiobändern auszuführen.

Die vorliegende Erfindung schafft demnach ferner ein Verfahren zur Bestimmung einer gemeinsamen Abtastfrequenz zur Direktabtastung einer Mehrzahl von Radiobändern, das die folgenden Schritte umfasst: Ermitteln eines ersten Nyquistbands in Bezug auf ein erstes Radioband und mindestens eines weiteren Nyquistbands in Bezug auf mindestens ein weiteres Radioband; und Bestimmen der gemeinsamen Abtastfrequenz als eine Frequenz, die sowohl in dem ersten Nyquistband als auch in dem mindestens einen weiteren Nyquistband angeordnet ist. Die von den einzelnen Nyquistbändern umfassten Frequenzen können jeweils zur Abtastung des zugeordneten Radiobands geeignet sein. Entsprechend dem Nyquiskriterium können dabei auch Unterabtastungen vorgesehen sein.

Dementsprechend können das erste Nyquistband und das mindestens eine weitere Nyquistband unterschiedliche Ordnungen aufweisen. Eine höhere Ordnung kann dabei eine stärkere Unterabtastung zur Folge haben. Auf diese Weise kann die Unterabtastung bei Radiobändern mit höheren Frequenzen größer gewählt werden als bei Radiobändern mit niedrigeren Frequenzen. Dies ermöglicht es, eine gemeinsame Abtastfrequenz für Radiobänder zu finden, auch wenn sich die Frequenzen der Radiobänder um mehrere Zehnerpotenzen unterscheiden.

Die gemeinsame Abtastfrequenz kann als eine Frequenz bestimmt werden, die einen möglichst großen Abstand zu den Bandgrenzen des ersten Nyuistbands und des mindestens einen weiteren Nyquistbands aufweist. Dadurch können entsprechende Bandfilter in HF-Vorstufen möglichst einfach realisiert werden.

Auch kann die gemeinsame Abtastfrequenz als eine Frequenz bestimmt werden, die ein Vielfaches einer idealen Abtastfrequenz des ersten Radiobandes oder des mindestens einem weiteren Radiobandes ist. Dies kann zu einer weiteren Vereinfachung des Gesamtsystems führen.

Die vorliegende Erfindung schafft ferner ein Steuergerät, das ausgebildet ist, um die Schritte des erfindungsgemäßen Verfahrens durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller oder DSP neben anderen Softwaremodulen vorhanden sind. Das Steuergerät kann im Zusammenhang mit der vorliegenden Erfindung ein Rundfunkempfänger oder Teil eines Rundfunkempfängers, insbesondere ein Empfangsteil, sein.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät ausgeführt wird.

Die Erfindung wird nachstehend anhand der beigefügten Zeichnungen beispielhaft näher erläutert. Es zeigen:

Fig. 1 ein Ablaufdiagramm eines erfindungsgemäßen Verfahrens zur Direktabtastung einer Mehrzahl von Radiobändern;

Fig. 2 ein Ablaufdiagramm eines erfindungsgemäßen Verfahrens zur Bestimmung einer gemeinsamen Abtastfrequenz; und

Fig. 3 ein Blockschaltbild eines Ausführungsbeispiels der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

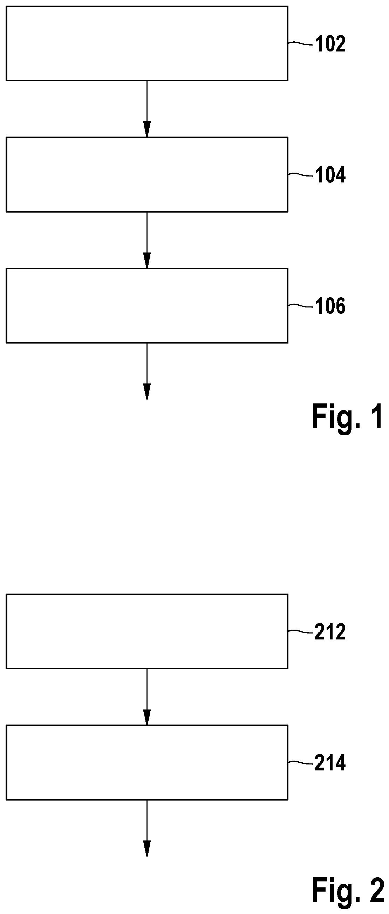

Fig. 1 zeigt ein Ablaufdiagramm eines erfindungsgemäßen Verfahrens zur Direktabtastung einer Mehrzahl von Radiobändern, gemäß einem Ausführungsbeispiel der vorliegenden Erfindung.

In einem ersten Schritt erfolgt ein Empfangen 102 eines ersten Radiobands über eine erste Schnittstelle sowie ein Empfangen eines oder mehrerer weiterer Radiobänder über mindestens eine oder mehrere weitere Schnittstellen. Beispielsweise können ein erstes Radioband über eine erste Schnittstelle, ein zweites Radioband über eine zweite Schnittstelle und ein drittes Radioband über eine dritte Schnittstelle empfangen werden. Gemäß diesem Ausführungsbeispiel weisen die Radiobänder unterschiedliche Frequenzbereiche auf. In einem weiteren Schritt kann ein Empfangen 104 eines Auswahlsignals über eine weitere Schnittstelle erfolgen. Das Auswahlsignal kann definieren, welches der empfangenen Radiobänder zur weiteren Signalverarbeitung abgetastet werden soll. Das Auswahlsignal kann nach, zeitgleich oder vor dem Empfang 102 der Radiobänder durchgeführt werden. Kann zeitgleich immer nur ein Radiosignal abgetastet werden, so kann das Auswahlsignal lediglich ein einziges Radioband auswählen. Können dagegen zeitgleich zwei oder mehr Radiosignale abgetastet werden, so kann das Auswahlsignal eine entsprechende Anzahl von Radiobänd auswählen, die parallel abgetastet werden können. In einem weiteren Schritt erfolgt ein Abtasten 106 desjenigen oder derjenigen Radiobänder, die durch das Auswahlsignal definiert sind. Das Abtasten 106 erfolgt dabei für jedes auswählbare Radioband mit derselben Abtastfrequenz. Wird während der Abtastung 106 ein geändertes Auswahlsignal empfangen kann die Abtastung mit einem, entsprechend dem Auswahlsignal geänderten, Radioband weitergeführt werden.

Fig. 2 zeigt ein Ablaufdiagramm eines erfindungsgemäßen Verfahrens zur Bestimmung einer gemeinsamen Abtastfrequenz zur Direktabtastung einer Mehrzahl von Radiobändern, gemäß einem Ausführungsbeispiel der vorliegenden Erfindung.

In einem Schritt des Ermittelns 212 kann ein erstes Nyquistband bestimmt werden, dass einem ersten zu empfangenden oder bereits empfangenden Radioband zugeordnet ist. Das erste Nyquistband kann gemäß einer Nyquistbedingung bestimmt sein, die dem ersten Radioband zugeordneten ist. Ferner kann für jedes weitere zu empfangende oder bereits empfangende Radioband jeweils ein weiteres Nyquistband bestimmt werden. Dies kann basierend auf einer, dem jeweiligen Radioband entsprechend zugeordneten Nyquistbedingung erfolgen. Die Nyquistbedingungen können sich dabei unterscheiden, indem sie beispielsweise unterschiedliche Ordnungen aufweisen. Nach der Bestimmung der Nyquistbänder kann ein Bestimmen 214 der gemeinsamen Abtastfrequenz durchgeführt werden. Dabei kann die gemeinsame Abtastfrequenz als eine Frequenz bestimmt werden, die in jedem der ermittelten Nyquistbänder enthalten ist. Dies kann mittels eines geeigneten Auswahl- oder Vergleichsalgorithmus erfolgen. Typischerweise lassen sich aus der Menge der Nyqistbänder eine Mehrzahl möglicher gemeinsamer Abtastfrequenzen ermitteln. Stehen eine Mehrzahl möglicher gemeinsamer Abtastfrequenzen zur Auswahl, so kann eine der möglichen Frequenzen als gemeinsame Abtastfrequenz ausgewählt werden. Dies kann gemäß vorbestimmten Auswahlkriterien erfolgen. Diese eine gemeinsame Abtastfrequenz kann dann zum Abtasten der Mehrzahl von Radiobändern eingesetzt werden.

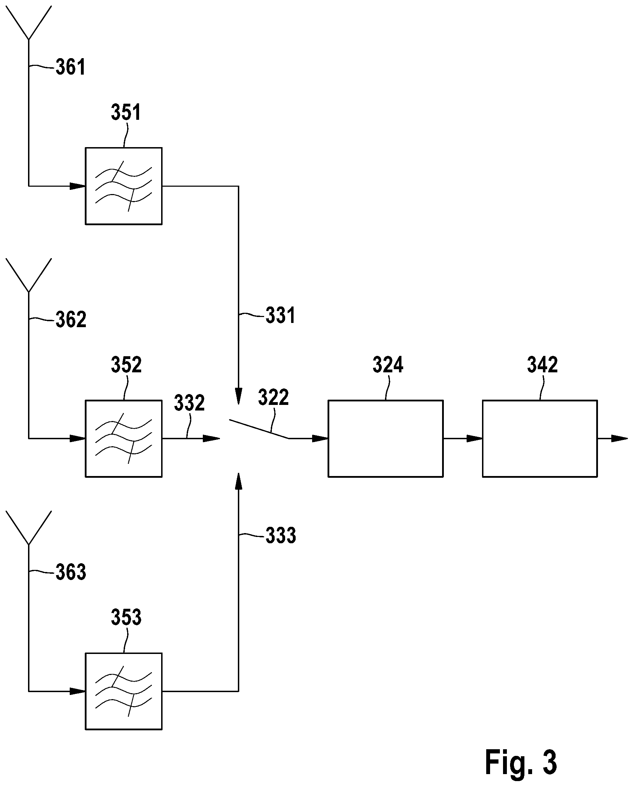

Fig. 3 zeigt ein Blockschaltbild einer Empfangsvorrichtung gemäß einem Ausführungsbeispiel der vorliegenden Erfindung. Die Empfangsvorrichtung kann ausgebildet sein, um das erfindungsgemäße Verfahren zur Direktabtastung einer Mehrzahl von Radiobändern umzusetzen. Dazu kann die Empfangsvorrichtung ein entsprechendes Steuergerät aufweisen.

Die Empfangsvorrichtung weist eine Umschalteinrichtung 322 und eine Abtasteinrichtung 324 auf. Die Umschalteinrichtung 322 weist eine oder mehrere Schnittstellen auf, um eine Mehrzahl von Radiobändern 331, 332, 333 zu empfangen. Die Umschalteinrichtung 322 ist ausgebildet, um eines der Radiobänder 331, 332, 333 auszuwählen und an die Abtasteinrichtung 324 bereitzustellen. Dazu kann die Umschalteinrichtung 322 ausgebildet sein, um ein Auswahlsignal zu empfangen, das dasjenige Radioband definieren kann, das mittels der Umschalteinrichtung 322 an die Abtasteinrichtung 324 weitergeleitet werden soll. Die Abtasteinrichtung 324 ist ausgebildet, um das weitergeleitete Radioband von der Umschalteinrichtung 322 zu empfangen und mit einer gemeinsamen Abtastfrequenz abzutasten. Die Abtasteinrichtung 324 kann ausgebildet sein, um ein entsprechendes Abtastsignal, dass die gemeinsame Abtastfrequenz aufweist zu empfangen oder zu generieren. Die Abtasteinrichtung 324 kann ausgebildet sein, um ein abgetastetes Radioband bereitzustellen. Die Abtasteinrichtung 324 kann als Analog-Digital-Wandler (ADC) ausgeführt sein.

Das abgetastete Radioband kann von einer Einrichtung zur digitalen Signalverarbeitung 342 empfangen und weiterverarbeitet werden. Die digitale Signalverarbeitung 342 kann ausgebildet sein, um ein weiterverarbeitetes Radioband auszugeben. Die Einrichtung zur digitalen Signalverarbeitung 342 kann als digitaler Signalprozessor (DSP) ausgeführt sein.

Die Umschalteinrichtung 322 kann ausgebildet sein, um die Radiobänder 331, 332, 333 von einer oder einer Mehrzahl von Empfangseinrichtungen zu empfangen. Gemäß diesem Ausführungsbeispiel ist die Umschalteinrichtung 322 ausgebildet, um das erste Radioband 331 von einer ersten HF-Vorstufe 351, das zweite Radioband 332 von einer zweiten HF-Vorstufe 352 und das dritte Radioband 333 von einer dritten HF-Vorstufe 353 zu empfangen.

Gemäß diesem Ausführungsbeispiel weist die Empfangsvorrichtung eine erste Antenne 361, eine zweite Antenne 362 und eine dritte Antenne 363 auf. Die erste Antenne 361 ist ausgebildet, um ein erstes Hochfrequenzsignal zu empfangen und an die erste HF-Vorstufe 351 bereitzustellen. Die zweite Antenne 362 ist ausgebildet, um ein zweites Hochfrequenzsignal zu empfangen und an die zweite HF-Vorstufe 352 bereitzustellen. Die dritte Antenne 363 ist ausgebildet, um ein drittes Hochfrequenzsignal zu empfangen und an die dritte HF-Vorstufe 353 bereitzustellen. Gemäß diesem Ausführungsbeispiel ist die erste Antenne 361 ausgebildet, um ein AM-Radiosignal zu empfangen, die zweite Antenne 362 ist ausgebildet, um ein FM-Radiosignal zu empfangen und die dritte Antenne 363 ist ausgebildet, um ein DAB Band III-Radiosignal zu empfangen. Dementsprechend kann es sich bei der ersten HF-Vorstufe 351 um eine AM-Vorstufe, bei der zweiten HF-Vorstufe 352 um eine FM-Vorstufe und bei der dritten HF-Vorstufe 353 um eine DAB Band III-Vorstufe handeln. Die Art und Anzahl der empfangenen Signale und somit die Art und Anzahl der Signalpfade ist lediglich beispielhaft gewählt und kann angepasst werden. So kann z.B. eine Kombinationsantenne für zwei oder mehrere Empfangsbänder gleichzeitig genutzt werden.

Anhand der in Fig. 3 gezeigten Vorrichtung wird ein System beschrieben, bei dem das FM Band, das AM Band und das DAB Band III mit Hilfe eines oder mehrerer A/D-Wandler digitalisiert werden können. Um einen einfachen Aufbau zu erhalten, ist es vorteilhaft den oder die A/D-Wandler für alle drei Bänder mit derselben Abtastfrequenz betrieben zu können. Die erfindungsgemäße Wahl der Abtastfrequenz, die sich für solche Systeme eignet wird im Folgenden beschrieben.

Dazu zeigt Fig. 3 beispielhaft ein System zur Direktabtastung des FM Bandes 331, des AM Bandes 332 und des DAB Band III 333. Das System besteht für die drei Bänder 331, 332, 333 jeweils aus einer Antenne 361, 362, 363 und einer HF Vorstufe 351, 352, 353, bei der es sich um einen Bandfilter, eventuell einen Verstärker oder eventuell eine automatische Verstärkungsregelung (AGC) handeln kann. Statt unterschiedlicher Antennen für jedes Empfangsband kann auch eine Antenne für zwei oder mehrere Empfangsbänder gleichzeitig genutzt werden. Nach einem Umschalter 322 folgen ein A/D-Wandler 324 und eine digitale Signalverarbeitungseinheit 342, hier beispielhaft als DSP dargestellt. Je nach Schalterstellung des Umschalters 322 wandelt der A/D Wandler 324 das FM Band 331, das AM Band 332 oder das DAB Band III 333. In der nachfolgenden digitalen Signalverarbeitungseinheit 342 können dann in Abhängigkeit von der verfügbaren Rechenleistung beliebig viele Kanäle des empfangenen Bandes 331, 332, 333 demoduliert werden. Alternativ ist es auch möglich zwei oder mehrere A/D Wandler 324 vorzusehen, um zwei oder mehrere Bänder 331, 332, 333 gleichzeitig wandeln und demodulieren zu können. In diesem Fall können beispielsweise zwei A/D Wandler 324 parallel angeordnet sein und ein oder zwei Umschalter 322 können zwei ausgewählte der Bänder 331, 332, 333 an die zwei A/D Wandler zur Abtastung weiterleiten.

Um einen einfachen Aufbau zu erhalten, ist es vorteilhaft, den oder die A/D Wandler 324 für alle drei Bänder 331, 332, 333 mit derselben Abtastfrequenz zu betreiben.

Dies kann erfindungsgemäß mit folgender Wahl der Abtastfrequenz erreicht werden. Die Bandgrenzen sind hier beispielhaft für Europa angegeben.

Für das AM Band (f_AM_min=153kHz bis f_AM_max=26,1 MHz) wird das erste Nyquistband bestimmt:

$$f\_abtas\ t >\ 2 * f\_AM\_max \qquad (1.\ Nyquistband)$$

Für das FM Band (f_FM_min=87.5MHz bis f_FM_max=108MHz) wird das zweite Nyquistband bestimmt:

$$2 * f\_FM\_min\ >\ f\_abtast\ >\ f\_FM\_max \qquad (2.\ Nyquistband)$$

Für das DAB Band III (f_DAB_min=174,928MHz bis f_DAB_max=239,2MHz) wird das dritte Nyquistband bestimmt:

$$f\_DAB\_min >\ f\_abtast >\ 2 * f\_DAB\_max/3 \qquad (3.\ Nyquistband)$$

Die Bänder 331, 332, 333 werden somit gemäß dem Nyquistkriterium abgetastet, gemäß dem gilt:

$$(2 * f\_min)\ /\ (n\text{-}1) >\ f\_abtast >\ 2 * f\_max/n$$

Dabei wird für das AM Band 331 n gleich 1, für das FM Band 332 n gleich 2 und für das DAB Band 333 n gleich 3 gesetzt. Es werden somit Nyquistbänder unterschiedlicher Ordnungen eingesetzt.

Zusammengefasst für alle drei Bänder 331, 332, 333 ergibt sich somit:
Bedingung 1:

$$min(2 * f\_FM\_min, f\_DAB\_min >\ f\_abtast\ >\ max(f\_AM\_max,\ f\_FM\_max,\ 2 * f\_DAB\_max/3)$$

d.h.:
min(175MHz, 174,928MHz) > f_abtast > max(26,1 MHz, 108MHz, 159,467MHz)

Vorteilhaft kann die Wahl der Abtastfrequenz so gewählt werden, dass sich für alle Bänder ein möglichst großer Abstand der oberen und unteren Bandgrenzen zu den durch die Abtastfrequenz bestimmten Grenzen der jeweiligen Nyquistbänder ergibt. Auf diese Weise können die Bandfilter in den HF Vorstufen 351, 352, 352 möglichst einfach realisiert werden.

Daraus ergeben sich die folgenden weitere Bedingungen:

Bedingung 2:
Für das AM Band soll (f_abtast/2 - f_AM_max) möglichst groß sein.

Bedingung 3:
Für das FM Band soll (f_abtast - f_FM_max) möglichst groß und (f_FM_min - f_abtast/2) möglichst groß sein. Das heißt im Idealfall:

$$f\_abtast\ \text{-}\ f\_FM\_max\ =\ f\_FM\_min\ \text{-}\ f\_abtast/2$$

Daraus folgt:

$$f\_abtast = 2/3*(f\_FM\_max + f\_FM\_min)$$

$$f\_abtast = 2/3*(87.5MHz + 108MHz) = 130.33MHz$$

da nach Bedingung 1 f_abtast >=159,467MHz sein muß, folgt dass zur Optimierung für das FM Band möglichst klein im Rahmen der Bedingung 1 gewählt werden sollt. d.h f_abtast ~159,467MHz

Bedingung 4: Für das DAB Band III soll (3*f_abtast/2 - f_DAB_max) möglichst groß und (f_DAB_min - f_abtast) möglichst groß sein. Das heißt im Idealfall:

$$3*f\_abtast/2 - f\_DAB\_max = f\_DAB\_min - f\_abtast$$

Daraus folgt:

$$f\_abtast = 2/5*(f\_DAB\_max + f\_DAB\_min)$$

$$f\_abtast = 2/5*(174,928MHz + 239,2MHz) = 165,6512MHz$$

Damit folgt für den optimalen Bereich der Abtastfrequenz ein Kompromiss zwischen den vier Bedingungen:

$$159,467MHz <=f\_abtast <= etwa\ 165,6512MHz$$

Eine weitere Vereinfachung des Gesamtsystems wird erzielt, indem die Abtastrate so gewählt wird, dass sich für die nachfolgende digitale Signalverarbeitungseinheit eine möglichst einfache Reduzierung der Abtastrate auf eine für die Demodulation geeignete Rate ergibt.

Während die AM- und die FM-Demodulation weniger von einer bestimmten Abtastfrequenz abhängen beruht die DAB-Demodulation auf einer Abtastrate von 2.048MHz.

Damit ergibt sich als vorteilhafte Abtastrate:

$$etwa\ 165,6512MHz >= f\_abtast = N*2.048MHz >= 159,467$$

Unter den zuvor genannten Bedingungen optimal ist entweder

$$f\_abtast = 81*2.048MHz = 165,888MHz$$

oder

$$f\_abtast=80*2,048MHz=163,84MHz$$

da sich damit zusätzlicher zu der Optimierung des Abstandes der Empfangsbereiche zu den Bandgrenzen sehr einfache Dezimationen um den Faktor 3^4=81 bzw 2^4*5=80 für das DAB-Band ergeben.

Die beschrieben Erfindung kann allgemein angewendet werden auf Systeme, in denen der Empfang von DAB im Band III mit dem Empfang von Diensten im FM Band und/oder AM Band kombiniert wird. Dies ist z.B. der Fall bei HD Radio Empfang im FM und/oder AM Band, DRM Empfang im AM Band oder DRM+ Empfang im FM Band.

Der erfindungsgemäße Ansatz ermöglicht einen Geräteaufbau, in dem die Tunerbaugruppen durch einen oder mehrere Breitbandwandler ersetzt sind. Die Erfindung kann beispielsweise in zukünftigen Generationen von Rundfunk Empfängern eingesetzt werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweites Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

Die Erfindung ist durch die anhängigen Ansprüche definiert

**Patentansprüche**

1. Verfahren zur Direktabtastung einer Mehrzahl von Radiobändern, das die folgenden Schritte umfasst:

   Empfangen (102) eines ersten Radiobands (331) über eine erste Schnittstelle und mindestens eines weiteren Radiobands (332, 333) über mindestens eine weitere Schnittstelle, wobei das erste Radioband und das mindestens eine weitere Radioband jeweils unterschiedlichen Frequenzbereichen zugeordnet sind und es sich bei dem ersten Radioband oder dem mindestens einen weiteren Radioband um ein DAB-Band handelt;
   Ermitteln (212) eines ersten Nyquistbands in Bezug auf das erste Radioband (331) und mindestens eines weiteren Nyquistbands in Bezug auf das mindestens eine weitere Radioband (332, 333);
   Bestimmen (214) einer gemeinsamen Abtastfrequenz als eine Frequenz, die sowohl in dem ersten Nyquistband als auch in dem mindestens einen weiteren Nyquistband angeordnet ist;
   Empfangen (104) eines Auswahlsignals über eine Schnittstelle, wobei das Auswahlsignal anzeigt, ob eine Weiterverarbeitung des ersten Radiobands und/oder des mindestens einen weiteren Radiobands vorgesehen ist; und
   Abtasten (106) des ersten Radiobands mit der gemeinsamen Abtastfrequenz und/oder des mindestens einen weiteren Radiobands mit derselben gemeinsamen Abtastfrequenz, abhängig von dem Auswahlsignal.

2. Verfahren gemäß Anspruch 1, bei dem das erste Radioband (331) ein Signal repräsentiert, das von einer an das erste Radioband angepassten ersten Vorstufe (351) bereitgestellt wird und bei dem das mindestens eine weitere Radioband (332, 333) ein Signal repräsentiert, das von mindestens einer an das mindestens eine weitere Radioband angepassten weiteren Vorstufe (352, 353) bereitgestellt wird.

3. Verfahren gemäß einem der Ansprüche 1 oder 2, bei dem das erste und das mindestens eine weitere Radioband (331, 332, 333) Signale repräsentieren, die von mindestens einer an das jeweilige Radioband angepassten Antenne (361, 362, 363) bereitgestellt werden.

4. Verfahren gemäß einem der vorangegangenen Ansprüche, mit einem Schritt des Bereitstellens eines ersten abgetasteten Radiobands oder eines zweiten abgetasteten Radiobands an einer Schnittstelle, wobei die Schnittstelle eine Schnittstelle zu einer digitalen Signalverarbeitungseinrichtung (324) repräsentiert.

5. Verfahren gemäß einem der vorangegangenen Ansprüche, bei dem die Radiobänder (331, 332, 333) ferner ein AM-Band und/oder ein FM-Band umfassen.

6. Verfahren gemäß einem der vorangegangenen Ansprüche, bei dem die unterschiedlichen Frequenzbereiche einen Frequenzbereich zwischen 100kHz und 50MHz und/oder einen Frequenzbereich zwischen 50MHz und 150MHz und einen Frequenzbereich zwischen 150MHz und 250MHz umfassen.

7. Verfahren zur Bestimmung einer gemeinsamen Abtastfrequenz, gemäß einem der vorangegangenen Ansprüche, bei dem das erste Nyquistband und das mindestens eine weitere Nyquistband unterschiedliche Ordnungen aufweisen.

8. Verfahren zur Bestimmung einer gemeinsamen Abtastfrequenz, gemäß einem der vorangegangenen Ansprüche, bei dem die gemeinsame Abtastfrequenz als eine Frequenz bestimmt wird, die einen möglichst großen Abstand zu den Bandgrenzen des ersten Nyuistbands und des mindestens einen weiteren Nyquistbands aufweist.

**9.** Verfahren zur Bestimmung einer gemeinsamen Abtastfrequenz, gemäß einem der vorangegangenen Ansprüche, bei dem die gemeinsame Abtastfrequenz als eine Frequenz bestimmt wird, die ein Vielfaches einer idealen Abtastfrequenz des ersten Radiobandes oder des mindestens einem weiteren Radiobandes ist.

**10.** Steuergerät, das ausgebildet ist, um die Schritte eines Verfahrens gemäß einem der Ansprüche 1 bis 9 durchzuführen.

**11.** Computerprogrammprodukt mit Programmcode, der auf einem maschinenlesbaren Träger gespeichert ist, zur Durchführung des Verfahrens nach einem der Ansprüche 1 bis 9, wenn das Programm auf einem Steuergerätausgeführt wird.

**Claims**

**1.** Method for directly sampling a plurality of radio bands, comprising the following steps:

receiving (102) a first radio band (331) via a first interface and at least one further radio band (332, 333) via at least one further interface, wherein the first radio band and the at least one further radio band are each associated with different frequency ranges and the first radio band or the at least one further radio band is a DAB band;
ascertaining (212) a first Nyquist band for the first radio band (331) and at least one further Nyquist band for the at least one further radio band (332, 333);
determining (214) a common sampling frequency as a frequency arranged both in the first Nyquist band and in the at least one further Nyquist band;
receiving (104) a selection signal via an interface, wherein the selection signal indicates whether there is provision for further processing of the first radio band and/or of the at least one further radio band; and
sampling (106) the first radio band at the common sampling frequency and/or the at least one further radio band at the same common sampling frequency, depending on the selection signal.

**2.** Method according to Claim 1, in which the first radio band (331) represents a signal provided by a first input stage (351) matched to the first radio band and in which the at least one further radio band (332, 333) represents a signal provided by at least one further input stage (352, 353) matched to the at least one further radio band.

**3.** Method according to either of Claims 1 and 2, in which the first and the at least one further radio band (331, 332, 333) represent signals provided by at least one antenna (361, 362, 363) matched to the respective radio band.

**4.** Method according to one of the preceding claims, having a step of providing a first sampled radio band or a second sampled radio band on an interface, wherein the interface represents an interface to a digital signal processing device (324).

**5.** Method according to one of the preceding claims, in which the radio bands (331, 332, 333) further comprise an AM band and/or an FM band.

**6.** Method according to one of the preceding claims, in which the different frequency ranges comprise a frequency range between 100 kHz and 50 MHz and/or a frequency range between 50 MHz and 150 MHz and a frequency range between 150 MHz and 250 MHz.

**7.** Method for determining a common sampling frequency, according to one of the preceding claims, in which the first Nyquist band and the at least one further Nyquist band have different orders.

**8.** Method for determining a common sampling frequency, according to one of the preceding claims, in which the common sampling frequency is determined as a frequency that is at as great as possible an interval from the band limits of the first Nyquist band and of the at least one further Nyquist band.

**9.** Method for determining a common sampling frequency, according to one of the preceding claims, in which the common sampling frequency is determined as a frequency that is a multiple of an ideal sampling frequency of the first radio band or of the at least one further radio band.

**10.** Controller designed to perform the steps of a method according to one of Claims 1 to 9.

11. Computer program product having program code, stored on a machine-readable storage medium, for performing the method according to one of Claims 1 to 9 when the program is executed on a controller.

**Revendications**

1. Procédé d'échantillonnage direct d'une pluralité de bandes radio, le procédé comprenant les étapes suivantes :

recevoir (102) une première bande radio (331) par le biais d'une première interface et au moins une autre bande radio (332, 333) par le biais d'au moins une autre interface, la première bande radio et l'au moins une autre bande radio étant chacune affectées à des gammes de fréquences différentes et la première bande radio ou l'au moins une autre bande radio étant une bande DAB ;
déterminer (212) une première bande de Nyquist par rapport à la première bande radio (331) et au moins une autre bande de Nyquist par rapport à l'au moins une autre bande radio (332, 333) ;
déterminer (214) une fréquence d'échantillonnage commune comme fréquence située à la fois dans la première bande de Nyquist et dans l'au moins une autre bande de Nyquist ;
recevoir (104) un signal de sélection par le biais d'une interface, le signal de sélection indiquant si un traitement supplémentaire de la première bande radio et/ou de l'au moins une autre bande radio est prévu ; et
échantillonner (106) la première bande radio avec la fréquence d'échantillonnage commune et/ou l'au moins une autre bande radio avec la même fréquence d'échantillonnage commune, en fonction du signal de sélection.

2. Procédé selon la revendication 1, la première bande radio (331) représentant un signal fourni par un premier étage d'entrée (351) adapté à la première bande radio et au moins une autre bande radio (332, 333) représentant un signal fourni par au moins un autre étage d'entrée (352, 353) adapté à l'au moins une autre bande radio.

3. Procédé selon l'une des revendications 1 ou 2, la première et l'au moins une autre bande radio (331, 332, 333) représentant des signaux fournis par au moins une antenne (361, 362, 363) adaptée à la bande radio respective.

4. Procédé selon l'une des revendications précédentes, comprenant une étape consistant à fournir une première bande radio échantillonnée ou une deuxième bande radio échantillonnée au niveau d'une interface, l'interface représentant une interface avec un dispositif de traitement de signal numérique (324).

5. Procédé selon l'une des revendications précédentes, les bandes radio (331, 332, 333) comprenant en outre une bande AM et/ou une bande FM.

6. Procédé selon l'une des revendications précédentes, les différentes gammes de fréquences comprenant une gamme de fréquences comprise entre 100 kHz et 50 MHz et/ou une gamme de fréquences comprise entre 50 MHz et 150 MHz et une gamme de fréquences comprise entre 150 MHz et 250 MHz.

7. Procédé de détermination d'une fréquence d'échantillonnage commune selon l'une des revendications précédentes, la première bande de Nyquist et l'au moins une autre bande de Nyquist étant d'ordres différents.

8. Procédé de détermination d'une fréquence d'échantillonnage commune selon l'une des revendications précédentes, la fréquence d'échantillonnage commune étant déterminée comme fréquence qui présente la plus grande distance possible par rapport aux limites de bande de la première bande de Nyquist et de l'au moins une autre bande de Nyquist.

9. Procédé de détermination d'une fréquence d'échantillonnage commune selon l'une des revendications précédentes, la fréquence d'échantillonnage commune étant déterminée comme fréquence qui est un multiple d'une fréquence d'échantillonnage idéale de la première bande radio ou de l'au moins une autre bande radio.

10. Unité de commande conçue pour exécuter les étapes d'un procédé selon l'une des revendications 1 à 9.

11. Progiciel à code de programme stocké sur un support lisible par machine pour mettre en oeuvre le procédé selon l'une des revendications 1 à 9, lorsque le programme est exécuté sur une unité de commande.

```
┌─────────────────────────────┐
│                             │── 102
│                             │
└─────────────────────────────┘
              │
              ▼
┌─────────────────────────────┐
│                             │── 104
│                             │
└─────────────────────────────┘
              │
              ▼
┌─────────────────────────────┐
│                             │── 106
│                             │
└─────────────────────────────┘
              │
              ▼
```

**Fig. 1**

```
┌─────────────────────────────┐
│                             │── 212
│                             │
└─────────────────────────────┘
              │
              ▼
┌─────────────────────────────┐
│                             │── 214
│                             │
└─────────────────────────────┘
              │
              ▼
```

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006087506 A1
- US 2008248770 A1